# EUROPÄISCHE PATENTSCHRIFT

(11) **EP 0 473 740 B1**
(45) Veröffentlichungstag und Bekanntmachung des Hinweises auf die Patenterteilung: **15.05.1996**
(21) Anmeldenummer: 91905098.9
(22) Anmeldetag: 13.03.1991
(51) Int. Cl.: C08L 33/10, C08K 5/12, C08K 5/11, C08K 5/42, B43L 19/00

(54) **RADIERGUMMI UND VERFAHREN ZU DESSEN HERSTELLUNG**
RUBBER ERASER AND PROCESS FOR MANUFACTURING IT
GOMME A EFFACER ET PROCEDE DE FABRICATION DE LADITE GOMME

(30) Priorität: 21.03.1990 DE 4008981
(43) Veröffentlichungstag der Anmeldung: 11.03.1992
(73) Patentinhaber: J.S. STAEDTLER GmbH & Co, D-90427 Nürnberg (DE)
(72) Erfinder: HANDL, Werner, D-8502 Altdorf (DE)
(86) Internationale Anmeldenummer: DE9100222
(87) Internationale Veröffentlichungsnummer: WO9114737

(56) Entgegenhaltungen:
- DATABASE WPIL, no. 89-350913, Derwent Publications Ltd, (London, GB); & JP-A- 1259999 (DAITO KAKO K.K.) 17. Oktober 1989
- DATABASE WPIL, Nr. 86-079568, Derwent Publications Ltd (London, GB); & JP-A- 61029597 (MITSUBISHI KASEI K.K.) 10. Februar 1986

## Beschreibung

Die Erfindung betrifft einen Radierer gemäß dem Hauptanspruch sowie Verfahren zu dessen Herstellung nach den weiteren Ansprüchen.

Ein derartiger Radierer ist beispielsweise aus (E1) JP- Hi 1-259 999 (A) bekannt. Das hierin beschriebene feste Radiermaterial soll sich besonders zum Korrigieren von Schriften, die mit wässrigen Tinten oder mit elektronischen Trockenkopierern erstellt wurden, eignen. Deshalb ist hier ein hoher Anteil an Lösungsmitteln zwingend erforderlich, der zur sicheren Funktion derartiger Radierer auch in flüssiger Phase in der fertigen Radiermasse erhalten bleiben muß. Nachteilig hierbei ist es insbesondere, daß hierfür ein ständiges möglichst luftdichtes Verschließen des Radierers erforderlich ist. Aufgrund des erfindungswesentlichen und funktionsnotwendigen Zusatzes von sehr hochflüchtigem Dioxan müssen zudem weitere flüchtige Lösungsmittel zugesetzt werden, um eine Lagerfähigkeit auch unter normaler Raumtemperatur zu ermöglichen. Diese Radierer eignen sich wegen der agressiven flüssigen Komponente außerdem auch nicht für die Verwendung zum Radieren von Bleistiftabstrichen und greifen zudem bei offener Lagerung die Tischplatte oder sonstigen Untergrund an.

Ein anderer Radierer ist aus (1) DE-C- 31 31 458 bekannt. Von Nachteil ist hierbei, daß es aufgrund der PU-Komponente und dem i. d. R. hierbei oft vorhandenen Faktis-Anteil erforderlich ist, daß sowohl die Mischung in sich, als auch das Herstellungs-verfahren in sehr engen Grenzen aufeinander abgestimmt sein müssen, um die richtigen bzw. die erforderlichen Abriebeigenschaften zu erhalten. Außerdem lassen sich diese Massen nicht als Plastisole in besonders wirtschaftlicher Weise verarbeiten. Die Herstellung derartiger Radierer ist daher mit relativ hohem Aufwand verbunden, so daß diese Radierer insgesamt verhältnismäßig teuer sind und hinsichtlich der Abriebeigenschaften nur in sehr engen Grenzen variiert werden können.

Darüberhinaus sind aus (2) DE-C- 932 540, (3) DE-B- 28 37 159, (4) DE-B- 26 36 885, (5) DE-C- 25 26 404 und (6) DE-B- 26 07 557, Radierermassen bekannt, die insbesondere Polyvinylchlorid als Bindemittel aufweisen. Da in jüngster Zeit verschiedentlich Bedenken gegen PVC erhoben wurden hinsichtlich dessen Umweltverträglichekit und der entstehenden Abspaltung von Chlorwasserstoff (HCl) bei der Verbrennung, soll in verstärktem Maße versucht werden, auf den Einsatz dieses Kunststoffes zu verzichten. Zudem sind derartige Radierer oft nicht langzeitig UV- und alterungsbeständig und müssen diesbezüglich meist besonders stabilisiert werden.

**Aufgabe** der vorliegenden Erfindung ist es daher, einen Radiergummi zu schaffen, der diese Nachteile nicht aufweist, der nach unterschiedlichen Verfahren und in relativ weiten Toleranzgrenzen und damit preiswert herstellbar sowie langzeitig lagerfähig und temperaturunempfindlich ist und der insbesondere kein PVC enthält, zur Verminderung bzw. Vermeidung von Schadstoffemissionen bei der Verbrennung und zur einfachen Erzeugung UV- und alterungsbeständiger Produkte.

Diese Aufgabe wird mit den Merkmalen des Anspruchs 1 auf einfache Weise gelöst.
Bevorzugte Ausführungen, Weiterbildungen und Herstellungs-verfahren sind in den weiteren Ansprüche umfaßt.

Erfindungsgemäß soll der Radiergummi als Bindemittel Polyalkylmethacrylat (PAMA) enthalten bzw. im wesentlichen hieraus bestehen. Hierfür eignet sich insbesondere ein PAMA-Plastisol aus 15 bis 50 Gewichts-% einer oder mehrerer PAMA-Komponente(n) und aus Weichmacher.

Anhand einiger Ausführungsbeispiele wird die Erfindung nachfolgend näher beschrieben.

### Rahmenbeispiel :

15 - 50 Gew.-% Polyalkylmethacrylat (PAMA)
30 - 50 Gew.-% Weichmacher
0 - 50 Gew.-% Füllstoff
0 - 20 Gew.-% Glykole, Farbmittel und/oder sonstige Zusätze

### Beispiel 1

25 Gew.-% Polymethylmethacrylat (PMMA)
37 Gew.-% Di-(2-ethylhexy)-phthalat (Weichmacher)
38 Gew.-% Calciumcarbonat (Füllstoff)

### Beispiel 2

25 Gew.-% Polybutylmethacrylat (PBMA)
35 Gew.-% Di-n-(C6-C10)-alkylphthalat (Weichmacher)
40 Gew.-% Bimsmehl (Füllstoff)

### Beispiel 3

48 Gew.-% Polyethylmethacrylat (PEMA)
41 Gew.-% Diisononylphthalat (Weichmacher)
11 Gew.-% Diethylenglykol

### Beispiel 4

20 Gew.-% Polypropylmethacrylat (PPMA)
43 Gew.-% Diisodecylphthalat (DIDP = Weichmacher)
37 Gew.-% Calciumcarbonat (Füllstoff)

Die Herstellung erfindungsgemäßer Massen kann mit üblichen Vorrichtungen, z.B. mit herkömmlichen Mischern erfolgen.

### Beispiel 5

In einem evakuierbaren Dissolver werden das PAMA-Pulver, der Weichmacher und der Füllstoff sowie die ggf. sonst noch zuzusetzenden Komponenten innig vermischt und unter Rühren evakuiert.

Das so erhaltene Plastisol wird auf einem Doppelschnecken-Extruder geliert und mittels einer Düse zu einem endlosen Strang geformt.

Nach dem Kühlbad werden die Radiergummis auf die gewünschte Länge geschnitten und ggf. bedruckt.

### Beispiel 6

In einem Heizmischer werden das PAMA-Pulver und der Füllstoff unter hoher Drehzahl gemischt. während des Mischens wird der Weichmacher zugegeben. Durch die dabei auftretende Friktionswärme wird der Weichmacher von den PAMA-Körnern aufgenommen.

Das Granulat wird in einen Kühlmischer abgelassen und auf Raumtemperatur abgekühlt. Das so erhaltene Dryblend wird einem Extruder zugeführt und wie gemäß Beispiel 5 zu Radierern weiterverarbeitet.

### Beispiel 7

Das gemäß Beispiel 5 hergestellte Plastisol wird in Platten gegossen und mittels einer Etagenpresse aus- bzw. angeliert. Die so erhaltenen Platten werden zu Radierern geschnitten und ggf. bedruckt.

### Beispiel 8

Das PAMA-Granulat und der Weichmacher werden zunächst innig vermischt. Dann werden die sonstigen Bestandteile zugemischt, wobei vorteilhafterweise zunächst das PAMA-Plastisol als relativ flüssige Grundmasse hergestellt wird, in die dann die übrigen Komponenten unter Berücksichtigung der gewünschten Konsistenz eingemischt werden. Die weitere Verarbeitung kann gemäß einem der Beispiele 5 oder 7 erfolgen.

Alternativ hierzu kann aber auch zunächst eine Mischung aller trockenen Komponenten, also des PAMA-Pulvers, des Füllstoffes sowie der ggf. weiteren festen Bestandteile, wie z. B. eines Gleitmittels und/oder der Pigmente, hergestellt werden, der dann der Weichmacher unter inniger Vermischung bis zur Erzielung einer homogenen plastischen Masse, zugegeben wird.

Das erfindungsgemäß vorgeschlagene Polyalkylmethacrylat (PAMA) kann vorzugsweise ein Polymethylmethacrylat (PMMA), ein Polyethylmethacrylat (PEMA), ein Polypropylmethacrylat (PPMA), ein Polybutylmethacrylat (PBMA) und/oder ein Polymethylmethacrylat/n-Butylmethacrylat-Copolymerisat sein.

### Geeignete Weichmacher können sein:

Di-(2-ethylhexyl)phthalat, Di-n-c6-C10-alkylphthalat, Diisonoylphthalat, Alkylsulfonsäureester (C12-C20) des Phenols, Ester der Phthal-, Zitronen- und/oder der Adipinsäure, Epoyxweichmacher und/oder Polymerweichmacher, wie z. B. Phthalsäure- und/oder Adipinsäurepolyester.

Bevorzugte Füllstoffe sind Calciumcarbonat, Bimsmehl und/oder Glaspulver.

## Patentansprüche

1. Radiergummi aus Bindemittel und Weichmacher sowie gegebenenfalls Füllstoffen, Lösungsmitteln, Farbmitteln und/oder sonstigen Zusätzen, wobei das Bindemittel ein Polyalkylmethacrylat (PAMA) ist,
**dadurch gekennzeichnet,**
daß er
a) 15 - 50 Gew.-% Polyalkylmethacrylat (PAMA)
b) 30 - 50 Gew.-% Weichmacher,
c) 0 - 50 Gew.-% Füllstoff,
d) 0 - 20 Gew.-% Lösungsmittel, Farbmittel und/oder sonstige Zusätze enthält.

2. Radiergummi nach Anspruch 1,
**dadurch gekennzeichnet,**
daß das Bindemittel aus PAMA-Partikeln und eingeliertem Weichmacher besteht.

3. Radiergummi nach Anspruch 1 oder 2,
**dadurch gekennzeichnet,**
daß das Polyalkylmethacrylat (PAMA) ein Polymethylmethacrylat (PMMA), Polyethylmethacrylat (PEMA), Polypropylmethacrylat (PPMA) und/oder Polybutylmethacrylat (PBMA) ist.

4. Radiergummi nach einem der vorhergehenden Ansprüche,
**dadurch gekennzeichnet,**
daß das PAMA ein Copolymer ist.

5. Radiergummi nach Anspruch 4,
**dadurch gekennzeichnet,**
daß das PAMA ein Methylmethacrylat/n-Butylmethacrylat-Copolymerisat ist.

6. Radiergummi nach einem der vorhergehenden Ansprüche,
**dadurch gekennzeichnet,**
daß der Weichmacher ein Di-(2-ethylhexyl)-phthalat und/oder ein Di-n-(C6-C10)-alkylphthalat ist.

7. Radiergummi nach einem der Ansprüche 1 bis 5,
**dadurch gekennzeichnet,**
daß der Weichmacher ein Diisononylphthalat und/oder ein Alkylsulfonsäureester (C12-C20) des Phenols ist.

8. Radiergummi nach einem der Ansprüche 1 bis 5
**dadurch gekennzeichnet,**
daß der Weichmacher ein Ester der Phthal-, Adipin- und/oder der Zitronensäure ist.

9. Radiergummi nach einem der Ansprüche 1 bis 5,
**dadurch gekennzeichnet,**
daß der Weichmacher ein Polymerweichmacher, insbesondere ein Phthalsäure- und oder ein Adipinsäurepolyester ist.

10. Radiergummi nach einem der Ansprüche 1 bis 5,
**dadurch gekennzeichnet,**
daß der Weichmacher ein Epoxyweichmacher ist.

11. Radiergummi nach einem der vorhergehenden Ansprüche
**dadurch gekennzeichnet,**
daß er als Füllstoff Calciumcarbonat, Bimsmehl und/oder Glaspulver enthält.

12. Verfahren zur Herstellung eines Radiergummis gemäß einem der vorhergehenden Ansprüche,
**dadurch gekennzeichnet,**
daß zunächst ein Plastisol aus feinkörnigem Polyalkylmethacrylat und Weichmacher gebildet wird und daß diesem Plastisol dann ggf. Füllstoffe, Gleitmittel, Farbmittel und/oder sonstige Zusätze beigemischt werden.

13. Verfahren zur Herstellung eines Radiergummis nach einem der Ansprüche 1 bis 11,
**dadurch gekennzeichnet,**
daß zunächst das PAMA-Pulver, der Füllstoff sowie die ggf. weiteren trockenen Komponenten, wie Gleitmittel, Pigmente usw., trocken innig vermischt werden und daß dieser Mischung dann der flüssige Weichemacher zugesetzt und eingemischt bzw. eingeknetet wird.

## Claims

1. Eraser of binder and softener as well as optionally fillers, solvents, colourants and/or other additives, wherein the binder is a polyalkylmethacrylate (PAMA), characterised thereby that it contains
a) 15 to 50 weight percent of polyalkylmethacrylate (PAMA)
b) 30 to 50 weight percent of softener,
c) 0 to 50 weight percent of filler,
d) 0 to 20 weight percent of solvent, colourant and/or other additives.

2. Eraser according to claim 1, characterised thereby that the binder consists of PAMA particles and gelatinised-in softener.

3. Eraser according to claim 1 or 2, characterised thereby that the polyalkylmethacrylate (PAMA) is a polymethylmethacrylate (PMMA), polyethylmethacrylate (PEMA), a polypropylmethacrylate (PPMA) and/or a polybutylmethacrylate (PBMA).

4. Eraser according to one of the preceding claims, characterised thereby that the PAMA is a copolymer.

5. Eraser according to claim 4, characterised thereby that the PAMA is a methylmethacrylate/n-butylmethacrylate copolymerisate.

6. Eraser according to one of the preceding claims, characterised thereby that the softener is a di-(2-ethylhexyl)-phthalate and/or a di-n-(C₆-C₁₀)-alkylphthalate.

7. Eraser according to one of claims 1 to 5, characterised thereby that the softener is a diisononylphthalate and/or an alkylsulfonic acid ester (C₁₂-C₂₀) of the phenol.

8. Eraser according to one of claims 1 to 5, characterised thereby that the softener is an ester of phthalic, adipic and/or citric acid.

9. Eraser according to one of claims 1 to 5, characterised thereby that the softener is a polymer softener, particularly a phthalic acid polyester and/or an adipic acid polyester.

10. Earaser according to one of claims 1 to 5, characterised thereby that the softener is an epoxy softener.

11. Eraser accprding to one of the preceding claims, characterised thereby that as filler it contains calcium carbonate, pumice powder and/or glass powder.

12. Method of manufacturing an eraser according to one of the proceding claims, characterised thereby that initially a plastisol of finely particulate polyalkylmethacrylate and softener is formed and that the fillers, lubricants, colourants and/or other additives are admixed to this plastisol.

13. Method of manufacturing an eraser according to one of claims 1 to 11, characterised thereby that initially the PAMA powder, the filler as well as the optional further dry components such as lubricants, pigments, etc., are dry mixed intimately and that the liquid softener is then added to and mixed or kneaded into this mixture.

## Revendications

1. Gomme pour effacer, formée d'un liant et d'un plastifiant et, éventuellement de charges, de solvants, de colorants et/ou d'autres additifs, le liant étant un poly(méthacrylate d'alkyle) (PAMA), gomme caractérisée en ce qu'elle contient :
a) 15 à 50 % en poids de poly(méthacrylate d'alkyle) (PAMA)
b) 30 à 50 % en poids d'un plastifiant,
c) 0 à 50 % en poids d'une charge,
d) 0 à 20 % en poids d'un solvant, d'un colorant et/ou d'autres additifs

2. Gomme pour effacer, selon la revendication 1, caractérisée en ce que le liant consiste en des particules de PAMA et en du plastifiant incorporé par gélification.

3. Gomme pour effacer selon la revendication 1 ou 2, caractérisée en ce que le poly(méthacrylate d'alkyle) (PAMA) est du poly(méthacrylate de méthyle) (PMMA), du poly(méthacrylate d'éthyle) (PEMA), du poly(méthacrylate de propyle) (PPMA) et/ou du poly(méthacrylate de butyle) (PBMA).

4. Gomme pour effacer selon l'une des revendications précédentes, caractérisée en ce que le PAMA est un copolymère.

5. Gomme pour effacer selon la revendication 4, caractérisée en ce que le PAMA est un copolymère de méthacrylate de méthyle/méthacrylate de n-butyle.

6. Gomme pour effacer selon l'une des revendications précédentes, caractérisée en ce que le plastifiant est un phtalate de di-(2-éthylhexyle) et/ou un phtalate de di-n-alkyle (en C₆ à C₁₀).

7. Gomme pour effacer selon l'une des revendications 1 à 5, caractérisée en ce que le plastifiant est un phtalate de diisononyle et/ou un ester d'acide alkylsulfonique (en C₁₂ à C₂₀) du phénol.

8. Gomme pour effacer selon l'une des revendications 1 à 5, caractérisée en ce que le plastifiant est un ester de l'acide phtalique, de l'acide adipique et/ou de l'acide citrique.

9. Gomme pour effacer selon l'une des revendications 1 à 5, caractérisée en ce que le plastifiant est un polymère, notamment un polyester de l'acide phtalique et/ou un polyester de l'acide adipique.

10. Gomme pour effacer selon l'une des revendications 1 à 5, caractérisée en ce que le plastifiant est un époxyde.

11. Gomme pour effacer selon l'une des revendications précédentes, caractérisée en ce qu'elle contient comme charge du carbonate de calcium, de la farine de pierre de ponce, et/ou de la poudre de verre.

12. Procédé pour préparer une gomme pour effacer selon l'une des revendications précédentes, caractérisée en ce qu'on forme tout d'abord un plastisol de poly(méthacrylate d'alkyle) en grain fin et d'un plastifiant, et en ce qu'on incorpore ensuite par mélangeage à ce plastisol, éventuellement, des charges, du lubrifiant, du colorant et/ou d'autres additifs.

13. Procédé pour produire une gomme pour effacer selon l'une des revendications 1 à 11, caractérisé en ce qu'on mélange tout d'abord intimement à sec la poudre de PAMA, la charge ainsi que les autres constituants secs éventuellement présents, comme du lubrifiant, des pigments, etc., et en ce qu'on ajoute ensuite à ce mélange le plastifiant liquide et l'on incorpore par mélangeage ou par malaxage ce plastifiant liquide.
